# EUROPÄISCHE PATENTSCHRIFT

(11) **EP 3 615 815 B1**
(45) Veröffentlichungstag und Bekanntmachung des Hinweises auf die Patenterteilung: **22.02.2023**
(21) Anmeldenummer: 18719869.2
(22) Anmeldetag: 24.04.2018
(51) Int. Cl.: F16B 5/06

(54) **CLIP ZUM ABSTÜTZEN EINES ERSTEN BAUTEILS AN EINEM ZWEITEN BAUTEIL**
CLIP FOR SUPPORTING A FIRST COMPONENT ON A SECOND COMPONENT
CLIP POUR SUPPORTER UN PREMIER COMPOSANT SUR UN DEUXIÈME COMPOSANT

(30) Priorität: 28.04.2017 DE 102017004100
(43) Veröffentlichungstag der Anmeldung: 04.03.2020
(73) Patentinhaber: A Raymond Et Cie, 38000 Grenoble (FR)
(72) Erfinder: ECKERT, Thomas, 79713 Bad Säckingen (DE); HERRBACH, Florian, 67220 Triembach-Au-Val (FR); BIELAWSKI, Thomas, 79540 Lörrach (DE)
(74) Vertreter: König Szynka Tilmann von Renesse Patentanwälte Partnerschaft mbB Düsseldorf
(86) Internationale Anmeldenummer: PCT/EP2018/060483
(87) Internationale Veröffentlichungsnummer: WO 2018/197497

(56) Entgegenhaltungen:
- DE-B- 1 120 908
- DE-U1- 8 708 426
- US-A1- 2003 145 438

## Beschreibung

Die Erfindung betrifft einen Clip zum Abstützen eines ersten Bauteils an einem zweiten Bauteil sowie eine Vorrichtung mit einem ersten Bauteil und einem zweiten Bauteil sowie einem derartigen Clip und ein Verfahren zum Abstützen eines ersten Bauteils an einem zweiten Bauteil.

Aus US 2003/0145438 A1 ist ein Clip (Retention Clip) zum Abstützen einer Lüfterauslassgruppe (Air deflector housing unit) an einem Armaturenbrett eines Fahrzeugs (Dashboard area; "Horse-collar" area) bekannt. Der dort beschriebene Clip weist eine Aufnahme (trim piece affixing portion) zum Aufnehmen eines Vorsprungs (trim piece extension member) des ersten Bauteils und einen mit der Aufnahme verbundenen Schenkel (leg member) zum Abstützen an dem zweiten Bauteil auf (vgl. Figur 6b der US 2003/145438 A1). Der Schenkel weist einen Biegeabschnitt (intermediate knee portion) auf, welcher einen sich von der Aufnahme (trim piece affixing portion) weg erstreckenden Schenkelarm (first leg portion) mit einem eine zum Kontakt mit dem zweiten Bauteil vorgesehene Stützfläche aufweisenden Stützabschnitt (second leg portion) des Schenkels (leg member) verbindet. Dabei ist bei der US 2003/0145438 A1 vorgesehen, auf der einen Seite der Aufnahme und auf der anderen Seite der Aufnahme jeweils einen Schenkel vorzusehen.

Derartige Clips werden häufig dazu verwendet, das erste Bauteil unter Federvorspannung an dem zweiten Bauteil abzustützen. Beispielsweise soll bei in ein Armaturenbrett eines Fahrzeugs eingebauten Baugruppen verhindert werden, dass diese leicht aus dem Armaturenbrett gezogen werden können. Des Weiteren kann die Federvorspannung Vibrationen und damit verbundene Geräusche schmälern oder sogar unterbinden. Zugleich bietet das Arbeiten mit Federvorspannungen die Möglichkeit, derartige Baugruppen dennoch ohne Zerstörung auszubauen - sei es durch Aufbringen einer Kraft oberhalb eines bestimmten Kraftniveaus, bei dem die Federkraft überwunden wird, oder sei es durch den Einsatz von Werkzeugen, mit denen die Schenkel weggeschwenkt werden.

In der Praxis hat sich gezeigt, dass die aufbringbare Rückhaltekraft stark von dem Einhalten von Toleranzvorschriften abhängt. Wie die Figur 6b der US 2003/0145438 A1 zeigt, tritt die gewünschte Wirkung bei der dort gezeigten Anordnung der Lüfterauslassgruppe (Air deflector housing unit 100) relativ zum Armaturenbrett (Dashboard 200) ein. Es lässt sich jedoch leicht vorstellen, dass andere Kräfte wirken, wenn das Armaturenbrett (Dashboard 200) näher an der Lüfterauslassgruppe (Air deflector housing unit 100) liegt oder weiter davon entfernt. Das führt teilweise zu hohen Toleranzanforderungen, die sowohl die Herstellung des ersten Bauteils und des zweiten Bauteil erfüllen müssen, als auch deren Anordnung relativ zueinander.

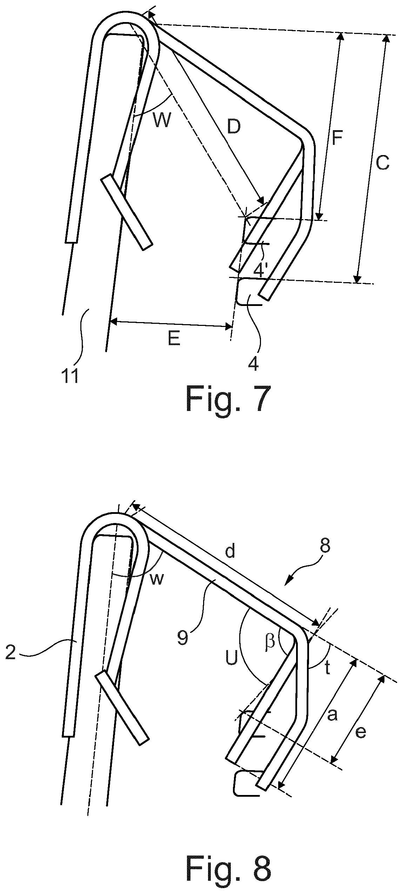

Aus der DE 1120908 B ist aus der dortigen Figur 7 ein Clip zum Abstützen eines ersten Bauteils an einem zweiten Bauteil bekannt. Dabei weist der Clip eine Aufnahme zum Aufnehmen eines Vorsprungs des ersten Bauteils und eine mit der Aufnahme verbundenen ersten Schenke (dort Flansch 37) zum Abstützen an dem zweiten Bauteil auf. Der erste Schenkel (dort Flansch 37) weist einen Biegeabschnitt auf, welcher einen sich von der Aufnahme weg erstreckenden Schenkelarm (etwa wo das Bezugszeichen 39 in der Figur 7 endet) mit einem eine zum Kontakt mit dem zweiten Bauteil vorgesehene Stützfläche aufweisenden Stützabschnitt des ersten Schenkels verbindet. Ferner weist der dortige Clip einen zweiten mit der Aufnahme verbundenen Schenkel auf (dort Flansch 38), der einen eine alternative Stützfläche aufweisenden Stützabschnitt aufweist, wobei sich der erste Schenkel (dort Flansch 37) und der zweite Schenkel (dort Flansch 38) auf derselben Seite der Aufnahme befinden. Bei dem in DE 1120908 B beschriebenen Clip weist der zweite Schenkel (dort Flansch 38) einen sich von der Aufnahme weg erstreckenden Schenkelarm (etwa dort wo das Bezugszeichen 38 endet) auf. Bei diesem zweiten Schenkel (dort Flansch 37) ist ein Biegeabschnitt vorgesehen, welcher den Schenkelarm des zweiten Schenkels mit dem Stützabschnitt des zweiten Schenkels verbindet. Die alternative Stützfläche, die an dem Stützabschnitt des zweiten Schenkels vorgesehen ist, ist in der gleichen Ebene vorgesehen, wie die Stützflächen des Stützabschnitts des ersten Schenkels.

Auch in DE 8708426 U1 ist ein Clip zum Abstützen eines ersten Bauteils an einem zweiten Bauteil bekannt, wobei der Clip eine Aufnahme (dort nach unten gebogenes freie Ende 20 des zweiten Arms 13) zum Aufnehmen eines Vorsprungs des ersten Bauteils und einen mit der Aufnahme verbundenen Schenkel (Teil des Blatts 11 ab der Rille 23) zum Abstützen an dem zweiten Bauteil aufweist. Der erste Schenkel weist einen Biegeabschnitt auf (zwischen der Rille 23 und dem Arm 12), welcher einen sich von der Aufnahme weg erstreckenden Schenkelarm des ersten Schenkels mit einem eine zum Kontakt mit dem zweiten Bauteil vorgesehene Stützfläche (nach unten weisende Fläche des Arms 12) aufweisenden Stützabschnitt des ersten Schenkels verbindet. Ferner weist der dort beschriebene Clip einen zweiten, mit der Aufnahme verbundenen Schenkel (blattförmiges Formelement 15) auf, der einen eine alternative Stützfläche (die nach links weisende Außenfläche des senkrecht laufenden Abschnitts 17) aufweisenden Stützabschnitt (Abschnitt 17) aufweist, wobei sich der erste Schenkel und der zweite Schenkel auf derselben Seite der Aufnahme befinden. Bei dem zweiten Schenkel ist vorgesehen, dass dieser einen sich von der Aufnahme weg erstreckenden Schenkelarm (oberer Abschnitt 16 des Formelements 15) aufweist. Bei dem aus DE 8708426 U1 bekannten Clip weist der zweite Schenkel einen Biegeabschnitt (zwischen dem oberen Abschnitt 16 und dem senkrecht verlaufenden Abschnitt 17) auf, welchen den Schenkelarm des zweiten Schenkels mit dem Stützabschnitt des zweiten Schenkels verbindet.

Aus US 2003/0145438 A1 ist ein Clip zum Abstützen eines ersten Bauteils an einem zweiten Bauteil bekannt, wobei der Clip eine Aufnahme (dort der Raum zwischen den "legs 24") zum Aufnehmen eines Vorsprungs des ersten Bauteils und einen mit der Aufnahme verbundenen ersten Schenkel (dort "leg member 12a") zum Abstützen an dem zweiten Bauteil aufweist. Ferner weist der dort gezeigte Clip einen zweiten, mit der Aufnahme verbundenen Schenkel (dort "leg member 12b") auf. Der erste Schenkel und der zweite Schenkel sind auf unterschiedlichen Seiten der Aufnahme angeordnet. Vor diesem Hintergrund lag der Erfindung die Aufgabe zugrunde, einen Clip zum Abstützen eines ersten Bauteils an einem zweiten Bauteil zu schaffen, der die Toleranzanforderungen an das erste Bauteil und das zweite Bauteil, bzw. die Toleranzanforderungen an die Lage des ersten Bauteils relativ zum zweiten Bauteil verringert.

Diese Aufgabe wird durch den Clip gemäß Anspruch 1 sowie die Vorrichtung gemäß Anspruch 9 und das Verfahren gemäß Anspruch 11 gelöst. Vorteilhafte Ausführungsformen sind in den Unteransprüchen der hiernach folgenden Beschreibung wiedergegeben.

Die Erfindung geht von dem Grundgedanken aus, nicht nur einen ersten Schenkel auf einer Seite der Aufnahme vorzusehen, sondern einen zweiten, mit der Aufnahme verbundenen Schenkel vorzusehen, der auf derselben Seite der Aufnahme angeordnet ist, wie der erste Schenkel. Der zweite Schenkel weist ebenfalls eine Stützfläche auf, die zum Kontakt mit dem zweiten Bauteil vorgesehen ist. Das Vorsehen eines zweiten Schenkels bietet nun die Möglichkeit, die Schenkel unterschiedlich auszuführen, beispielsweise in unterschiedlichen Winkeln von der Aufnahme fortzuführen oder aber mit unterschiedlich stark gebogenen Biegeabschnitten zu versehen und damit die Stützfläche des ersten Schenkels und die alternative Stützfläche des zweiten Schenkels so anzuordnen, dass eine Abstützung des ersten Bauteils an dem zweiten Bauteil über ein breites Toleranzband möglich ist. So wird es beispielsweise möglich, ein Abstützen des ersten Bauteils an einem zweiten Bauteil mittels des Clips bei Minimaltoleranz mit der Stützfläche des ersten Schenkels vorzunehmen, während ein Abstützen des ersten Bauteils an dem zweiten Bauteil bei Maximaltoleranz unter Einsatz der alternativen Stützfläche des zweiten Schenkels erfolgen kann. Für die jeweils konkrete Einbausituation (das konkrete erste Bauteil und das konkrete zweite Bauteil und deren Lage zueinander) mag der erfindungsgemäße Clip gegenüber dem Stand der Technik einen Mehraufwand bedeuten. So ist zu erwarten, dass in vielen der konkreten Einbausituationen nur die eine Stützfläche in Kontakt mit dem zweiten Bauteil kommt oder zumindest nur der eine Schenkel benötigt wird, um eine hinreichende Abstützkraft auf das zweite Bauteil zu erzeugen und somit der andere Schenkel gänzlich überflüssig ist. Der für den erfindungsgemäßen Clip zu treibende Mehraufwand kann jedoch Einsparungen bei der Herstellung des ersten Bauteils und des zweiten Bauteils insbesondere im Hinblick auf die besonders maßhaltige Herstellung des ersten und zweiten Bauteils bieten, insbesondere wenn diese Bauteile, bzw. die Anordnung dieser Bauteile zueinander mit einem höheren Toleranzband erfolgen kann.

Der erfindungsgemäße Clip ist zum Abstützen eines ersten Bauteils an einem zweiten Bauteil geeignet. Er ist somit dazu geeignet, eine Bewegung des ersten Bauteils relativ zu dem zweiten Bauteil in eine erste Richtung zu verhindern. Es ist denkbar, dass der Clip derart ausgeführt ist, dass er das erste Bauteil mit dem zweiten Bauteil verbinden kann, also auch eine Bewegung des ersten Bauteils relativ zum zweiten Bauteil in die der ersten Richtung entgegengesetzte Richtung verhindern kann. In der Mehrzahl der Einsatzfälle wird der erfindungsgemäße Clip jedoch so ausgelegt sein, dass er lediglich dazu geeignet ist, die Bewegung des ersten Bauteils relativ zum zweiten Bauteil in die erste Richtung zu verhindern.

Der erfindungsgemäße Clip weist eine Aufnahme zum Aufnehmen eines Vorsprungs des ersten Bauteils auf. Üblicherweise haben die Vorsprünge eine Stegform, bzw. Rippenform (die Form einer schmalen, vorspringenden Wand) oder sind stift- oder pilzförmig. Die Aufnahme hat deshalb insbesondere bevorzugt einen U-förmigen Querschnitt. Die Aufnahme kann jedoch auch trogförmig oder sacklochartig ausgestaltet sein. Aufgabe der Aufnahme ist es, den Clip mit dem Vorsprung des ersten Bauteils zu verbinden. Es sind somit auch Ausführungsformen denkbar, bei denen die Aufnahme als Klammer ausgebildet ist. Die Aufnahme kann zur besseren Verbindung mit dem Vorsprung beispielsweise Widerhaken aufweisen.

Der erfindungsgemäße Clip weist einen ersten Schenkel zum Abstützen an einem zweiten Bauteil auf, wobei der erste Schenkel mit der Aufnahme verbunden ist. In einer bevorzugten Ausführungsform ist der Schenkel einstückig mit der Aufnahme ausgeführt, beispielsweise wenn die Aufnahme durch Umbiegen eines Blechabschnitts hergestellt wird und der Schenkel durch entsprechendes Ausstanzen und Biegen ebenfalls aus dem Blechabschnitt hergestellt wird, aber über einen Steg in die Aufnahme übergeht. Alternativ sind Bauformen denkbar, bei denen ein separat hergestellter Schenkel mittels Fügeverfahren mit der Aufnahme verbunden werden. Dabei ist es auch denkbar, die Aufnahme und den Schenkel aus unterschiedlichen Materialien herzustellen. Es ist auch denkbar, dass der Clip als Spritzgussteil hergestellt wird und die Aufnahme und der mit ihr verbundene Schenkel somit ebenfalls einstückig ausgeführt werden.

Zumindest einer der Schenkel des erfindungsgemäßen Clips weist einen sich von der Aufnahme weg erstreckenden Schenkelarm auf. Dieser Schenkelarm hilft, den Abstand zwischen dem Vorsprung des ersten Bauteils und einer Auflage oder Kante des zweiten Bauteils, an der sich der Clip abstützen soll und somit das erste Bauteil an dem zweiten Bauteil abstützt, zu überbrücken. Dieser Schenkel weist ferner einen Stützabschnitt auf, der eine zum Kontakt mit dem zweiten Bauteil vorgesehene Stützfläche aufweist. Erfindungsgemäß verbindet ein Biegeabschnitt dieses Schenkels den Schenkelarm mit dem Stützabschnitt.

Der zweite Schenkel weist einen sich von der Aufnahme weg erstreckenden Schenkelarm auf. Auch dieser Schenkelarm hilft, den Abstand zwischen dem Vorsprung des ersten Bauteils und einer Auflage oder Kante des zweiten Bauteils, an der sich der Clip abstützen soll und somit das erste Bauteil an dem zweiten Bauteil abstützt, zu überbrücken.

In einer bevorzugten ersten Ausführungsform weist der zweite Schenkel einen Biegeabschnitt auf, welche den Schenkelarm des zweiten Schenkels mit dem Stützabschnitt des zweiten Schenkels verbindet. Hinsichtlich der Grundelemente ist der zweite Schenkel somit insbesondere bevorzugt gleich wie der erste Schenkel ausgeführt. Dabei werden in einer bevorzugten Ausführungsform jedoch die Abmessungen der einzelnen Abschnitte des Schenkels unterschiedlich gewählt um die alternative Stützfläche des zweiten Schenkels an einem anderen Ort im Raum anzuordnen, als die Stützfläche des ersten Schenkels, um damit den gewünschten Toleranzausgleich zu erreichen.

Der zweite Schenkel weist einen ersten Biegeabschnitt auf, welcher den Schenkelarm des zweiten Schenkels mit einem Übergangsabschnitt verbindet. Ferner weist der zweite Schenkel dann einen zweiten Biegeabschnitt auf, welche den Übergangsabschnitt mit dem Stützabschnitt des zweiten Schenkels verbindet. Es hat sich gezeigt, dass insbesondere das Zwischenschalten eines Übergangsabschnitts zwischen den Schenkelarm und den Stützabschnitt eine gute Möglichkeit bietet, den Stützabschnitt des zweiten Schenkels an einer gewünschten Stelle im Raum anzuordnen.

In einer bevorzugten Ausführungsform erstreckt sich die Aufnahme entlang einer Längsachse. In einer bevorzugten Ausführungsform ist die Biegeachse, um die der Biegeabschnitt des ersten Schenkels gebogen ist, parallel zur Längsachse ausgerichtet. In einer bevorzugten Ausführungsform ist bei der ersten bevorzugten Ausführungsform des zweiten Schenkels die Biegeachse, um die der Biegeabschnitt des zweiten Schenkels gebogen ist, parallel zur Längsachse ausgerichtet. In einer bevorzugten Ausführungsform der zweiten bevorzugten Ausführungsform des zweiten Schenkels ist die Biegeachse, um die der erste Biegeabschnitt des zweiten Schenkels gebogen ist, und/oder die Biegeachse, um die der zweite Biegeabschnitt des zweiten Schenkels gebogen ist, parallel zur Längsachse ausgerichtet.

In einer bevorzugten Ausführungsform der zweiten bevorzugten Ausführungsform des zweiten Schenkels ist der zwischen dem Schenkelarm des ersten Schenkels und dem Stützabschnitt des ersten Schenkels eingeschlossene Winkel unterschiedlich zu dem zwischen dem Schenkelarm des zweiten Schenkels und dem Übergangsabschnitt des zweiten Schenkels eingeschlossene Winkel. Dies stellt ein einfaches Mittel dar, um die Stützfläche des ersten Schenkels und die Stützfläche des zweiten Schenkels unterschiedlich im Raum anzuordnen.

In einer bevorzugten Ausführungsform ist der zwischen dem Schenkelarm des ersten Schenkels und dem Stützabschnitt des ersten Schenkels eingeschlossene Winkel größer als 45°, insbesondere bevorzugt größer als 60° und insbesondere bevorzugt größer als 75°. In einer bevorzugten Ausführungsform ist der zwischen dem Schenkelarm des ersten Schenkels und dem Stützabschnitt des ersten Schenkels eingeschlossene Winkel 90°. In einer bevorzugten Ausführungsform ist der zwischen dem Schenkelarm des ersten Schenkels und dem Stützabschnitt des ersten Schenkels eingeschlossene Winkel kleiner als 135°, insbesondere bevorzugt kleiner als 120°, insbesondere bevorzugt kleiner als 100°.

In einer bevorzugten Ausführungsform der zweiten bevorzugten Ausführungsform des zweiten Schenkels ist der zwischen dem Schenkelarm des ersten Schenkels und dem Stützabschnitt des ersten Schenkels eingeschlossene Winkel kleiner als der zwischen dem Schenkelarm des zweiten Schenkels und dem Übergangsabschnitt des zweiten Schenkels eingeschlossene Winkel.

In einer bevorzugten Ausführungsform der ersten bevorzugten Ausführungsform des zweiten Schenkels ist der zwischen dem Schenkelarm des ersten Schenkels und dem Stützabschnitt des ersten Schenkels eingeschlossene Winkel unterschiedlich zu dem zwischen dem Schenkelarm des zweiten Schenkels und dem Stützabschnitt des zweiten Schenkels eingeschlossene Winkel. Dies stellt ein einfaches Mittel dar, um die Stützfläche des ersten Schenkels und die Stützfläche des zweiten Schenkels unterschiedlich im Raum anzuordnen.

In einer bevorzugten Ausführungsform ist der zwischen dem Schenkelarm des zweiten Schenkels und dem Stützabschnitt des zweiten Schenkels, bzw. und dem Übergangsabschnitt des zweiten Schenkels eingeschlossene Winkel größer als 45 °, insbesondere bevorzugt größer als 60°, insbesondere bevorzugt größer als 75 ° und insbesondere bevorzugt größer als 90°. In einer bevorzugten Ausführungsform ist der zwischen dem Schenkelarm des zweiten Schenkels und dem Stützabschnitt des zweiten Schenkels, bzw. bzw. und dem Übergangsabschnitt des zweiten Schenkels eingeschlossene Winkel 120°. In einer bevorzugten Ausführungsform ist der zwischen dem Schenkelarm des zweiten Schenkels und dem Stützabschnitt des zweiten Schenkels, bzw. und dem Übergangsabschnitt des zweiten Schenkels eingeschlossene Winkel kleiner als 150°, insbesondere bevorzugt kleiner als 140°, insbesondere bevorzugt kleiner als 130°.

In einer bevorzugten Ausführungsform ist der zwischen dem Schenkelarm des zweiten Schenkels und dem Stützabschnitt des zweiten Schenkels eingeschlossene Winkel größer als 45 ° und insbesondere bevorzugt größer als 60°. In einer bevorzugten Ausführungsform ist der zwischen dem Schenkelarm des zweiten Schenkels und dem Stützabschnitt des zweiten Schenkels eingeschlossene Winkel 75°. In einer bevorzugten Ausführungsform ist der zwischen dem Schenkelarm des zweiten Schenkels und dem Stützabschnitt des zweiten Schenkels eingeschlossene Winkel kleiner als 120 °, insbesondere bevorzugt kleiner als 100 °, insbesondere bevorzugt kleiner als 90°.

Die Stützfläche des ersten Schenkels verläuft parallel zur alternativen Stützfläche des zweiten Schenkels.

In einer bevorzugten Ausführungsform hat die Aufnahme eine, insbesondere bevorzugt zumindest abschnittweise flach ausgeführte Rückwand. Insbesondere bevorzugt ist die Rückwand auf der Seite der Aufnahme angeordnet, die der Seite gegenüberliegt, auf der sich die Schenkel von der Aufnahme fort erstrecken. In einer bevorzugten Ausführungsform verläuft die Stützfläche des ersten Schenkels und/oder die alternative Stützfläche des zweiten Schenkels nicht parallel zur Rückwand.

In einer bevorzugten Ausführungsform entsprechen sich der Schenkelarm des ersten Schenkels und der Schenkelarm des zweiten Schenkels in Form und/oder Größe.

In einer bevorzugten Ausführungsform sind der Schenkelarm des ersten Schenkels und der Schenkelarm des zweiten Schenkels nebeneinander angeordnet.

In einer bevorzugten Ausführungsform weisen der erste Schenkel und der zweite Schenkel die gleiche Biegesteifigkeit auf.

In einer bevorzugten Ausführungsform weist der Clip mehr als zwei Schenkel auf einer Seite der Aufnahme auf. Mit der Anzahl der Schenkel erhöht sich die Möglichkeit der unterschiedlichen Anordnungen der Stützflächen im Raum, wodurch auch der Toleranzbereich erhöht wird, der für ein gutes Abstützen des ersten Bauteils an einem zweiten Bauteil nach wie vor geeignet ist. In einer bevorzugten Ausführungsform weist der Clip weniger als 20, insbesondere bevorzugt weniger als 10 Schenkel auf einer Seite der Aufnahme auf.

In einer bevorzugten Ausführungsform ist der Clip aus Metall und/oder Kunststoff gefertigt. In einer bevorzugten Ausführungsform ist der Clip nur aus Metall gefertigt. In einer alternativen Ausführungsform ist der Clip nur aus Kunststoff gefertigt. Es sind jedoch auch Bauformen denkbar, bei denen der Clip aus Metall und Kunststoff gefertigt ist, beispielsweise wenn der Kunststoff durch Metallstreben verstärkt wird oder beispielweise ein metallischer Schenkel an eine Kunststoffaufnahme befestigt wird.

In einer bevorzugten Ausführungsform ist der Clip einstückig ausgebildet.

In einer bevorzugten Ausführungsform sind der Schenkelarm des ersten Schenkels und/oder der Schenkelarm des zweiten Schenkels und/oder der Stützabschnitt des ersten Schenkels und/oder der Stützabschnitt des zweiten Schenkels und/oder der Übergangsabschnitt des zweiten Schenkels stabförmig ausgeführt. Insbesondere bevorzugt sind stabförmige Elemente so ausgeführt, dass sie einen rechteckigen Querschnitt haben, wobei auch quadratische Querschnitte denkbar sind oder aber auch runde oder ellipsenförmige Querschnitte denkbar sind. Bei rechteckigen Querschnitten läuft die Breitenrichtung des Stabs vorzugsweise parallel zu der Längsachse, entlang der sich die Aufnahme erstreckt. Bei rechteckigen Querschnitten des Stabs erstreckt sich die Höhe des Stabs, die geringer ist als die Breite des Stabs, insbesondere bevorzugt senkrecht zu der Längsachse, entlang der sich die Aufnahme erstreckt. In einer bevorzugten Ausführungsform sind der Schenkelarm des ersten Schenkels und/oder der Schenkelarm des zweiten Schenkels und/oder der Stützabschnitt des ersten Schenkels und/oder der Stützabschnitt des zweiten Schenkels und/oder der Übergangsabschnitt des zweiten Schenkels geradlinig ausgeführt.

In einer bevorzugten Ausführungsform ist am Ende des Stützabschnitts des ersten Schenkels und/oder am Ende des Stützabschnitts des zweiten Schenkels ein im Verhältnis zum Stützabschnitt im Winkel verlaufender Fußabschnitt ausgebildet, der als Fangschutz dienen kann.

Die erfindungsgemäße Vorrichtung weist ein erstes Bauteil und ein zweites Bauteil auf. Ferner weist die erfindungsgemäße Vorrichtung einen erfindungsgemäßen Clip auf.

In einer bevorzugten Ausführungsform weist die erfindungsgemäße Vorrichtung einen Vorsprung an dem ersten Bauteil auf. In einer bevorzugten Ausführungsform befindet sich der Vorsprung in der Aufnahme des Clips. In einer bevorzugten Ausführungsform stützt sich entweder der erste Schenkel mit seiner Stützfläche an dem zweiten Bauteil ab und/oder der zweite Schenkel stützt sich mit seiner alternativen Stützfläche an dem zweiten Bauteil ab.

In einer bevorzugten Ausführungsform weist die erfindungsgemäße Vorrichtung ein zweites Bauteil auf, das eine Ausnehmung aufweist, in der das erste Bauteil angeordnet ist, bzw. in die ein an dem ersten Bauteil angeordneter Vorsprung hinein ragt.

Das erfindungsgemäße Verfahren zum Abstützen eines ersten Bauteils an einem zweiten Bauteil sieht vor, dass die Aufnahme eines erfindungsungemäßen Clips mit einem Vorsprung des ersten Bauteils verbunden wird und entweder die Stützfläche des ersten Schenkels oder die alternative Stützfläche des zweiten Schenkels in Anlage mit dem zweiten Bauteil gebracht wird.

Der erfindungsgemäße Clip wird insbesondere bevorzugt beim Befestigen von Bauteilen an Trägerstrukturen, insbesondere Rahmen, von Fahrzeugen, insbesondere bevorzugt von Automobilen und dabei insbesondere bevorzugt zum Befestigen von Bauteilen im Innenraum des Fahrzeugs verwendet. Besonders bevorzugt wird der Clip zum Befestigen eines Bauteils an einem Armaturenbrett eines Fahrzeugs eingesetzt, beispielsweise um eine Lüftereinheit, ein Radio, einen Bildschirm, eine Kontrolleinheit, beispielsweise eine Kontrolleinheit für die Klimaanlage an einem Armaturenbrett eines Fahrzeugs zu befestigen.

Nachstehend wird die Erfindung anhand einer lediglich Ausführungsbeispiele der Erfindung darstellenden Zeichnung näher erläutert. Darin zeigen
- Fig. 1: eine Seitenansicht auf einen erfindungsgemäßen Clip zum Abstützen eines ersten Bauteils an einem zweiten Bauteil;
- Fig. 2: eine perspektivische Ansicht auf das den Clip gemäß Figur 1;
- Fig. 3: eine Seitenansicht auf eine erste Einbausituation des Clips gemäß Figur 1;
- Fig. 4: eine perspektivische Ansicht auf die erste Einbausituation des Clips gemäß Fig. 3;
- Fig. 5: eine Seitenansicht auf eine zweite Einbausituation des Clips gemäß Figur 1;
- Fig. 6: eine perspektivische Ansicht auf die zweite Einbausituation des Clips gemäß Fig. 5;
- Fig. 7: eine Seitenansicht eines erfindungsgemäßen Clips mit eingezeichneten für die Auslegung des Clips relevanten Größen;
- Fig. 8: eine Seitenansicht eines erfindungsgemäßen Clips mit eingezeichneten für die Auslegung des Clips relevanten Größen;
- Fig. 9: eine Seitenansicht auf einen nicht zur Erfindung gehörenden Clip zum Abstützen eines ersten Bauteils an einem zweiten Bauteil;
- Fig. 10: eine perspektivische Ansicht auf den Clip gemäß Figur 9;
- Fig. 11: eine Seitenansicht auf einen erfindungsgemäßen Clip zum Abstützen eines ersten Bauteils an einem zweiten Bauteil in einer zweiten Ausführungsform und
- Fig. 12: eine perspektivische Ansicht auf das den Clip gemäß Figur 11.

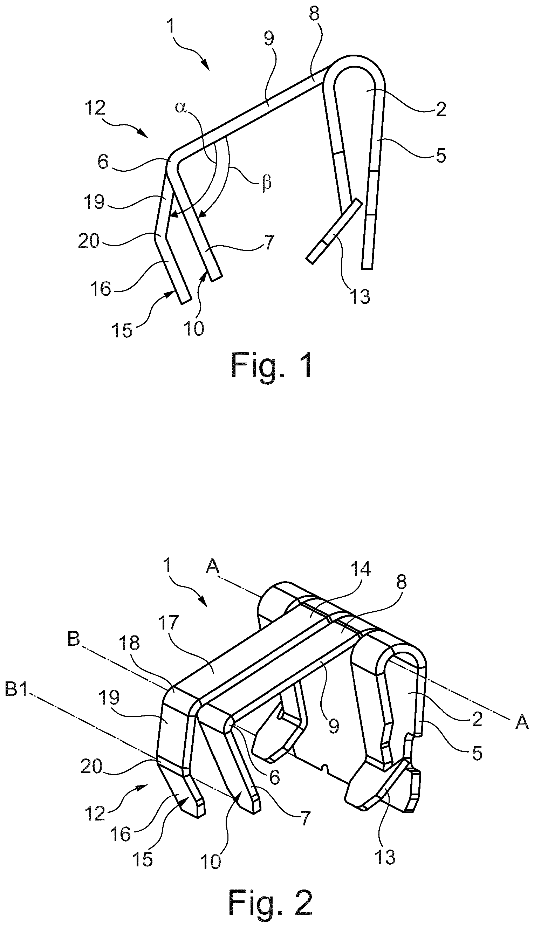

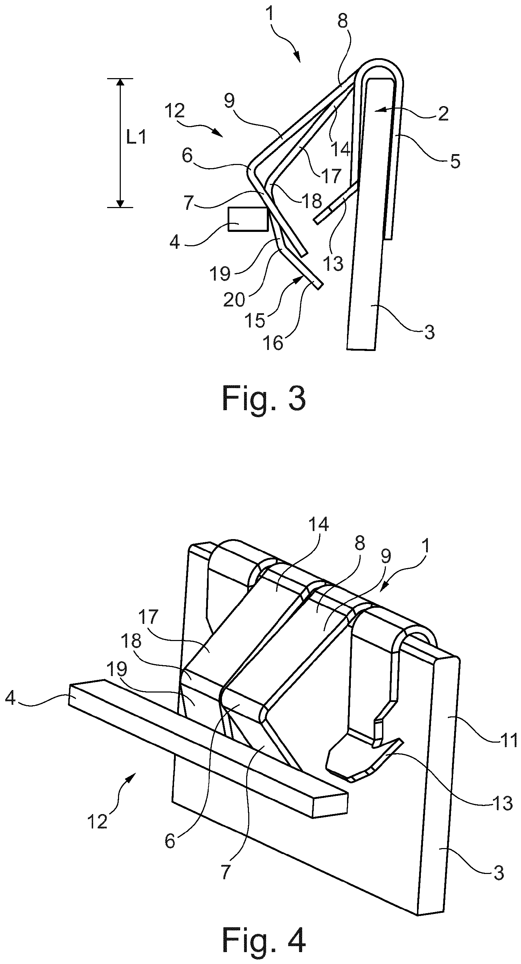

Der in den Figuren 1 bis 6 dargestellte Clip 1 eignet sich zum Abstützen eines ersten Bauteils 3 an einem zweiten Bauteil 4 (das in den Fig. 3 bis 6 stellvertretend für den eine Ausnehmung umgebenden Rand mit einem Balken dargestellt wird). Das erste Bauteil 3 kann eine Luftauslassdüse sein, die in eine hierfür vorgesehene Ausnehmung in einem Armaturenbrett (zweites Bauteil 4) befestigt werden soll. Dazu weist das erste Bauteil 3 einen Vorsprung 11 in Form eines Stegs oder einer Rippe auf. Dieser Vorsprung 11 wird in einer Aufnahme 2 des Clips 1 gehalten. Die Aufnahme 2 erstreckt sich entlang einer Längsachse A und hat in einem Querschnitt senkrecht zur Längsachse A einen U-förmigen Querschnitt. Die Aufnahme 2 hat eine Rückwand 5. An der Vorderseite 12 der Aufnahme 2 sind Widerhaken 13 ausgebildet. Diese schneiden in den Vorsprung 11 ein und sorgen somit für ein gutes Halten des Vorsprungs 11 in der Aufnahme 2.

Der Clip 1 weist einen ersten Schenkel 8 und einen zweiten Schenkel 14 auf. Der erste Schenkel 8 und der zweite Schenkel 14 sind auf der gleichen Seite der Aufnahme 2 angeordnet und erstrecken sich von der Vorderseite 12 in die gleiche Richtung fort.

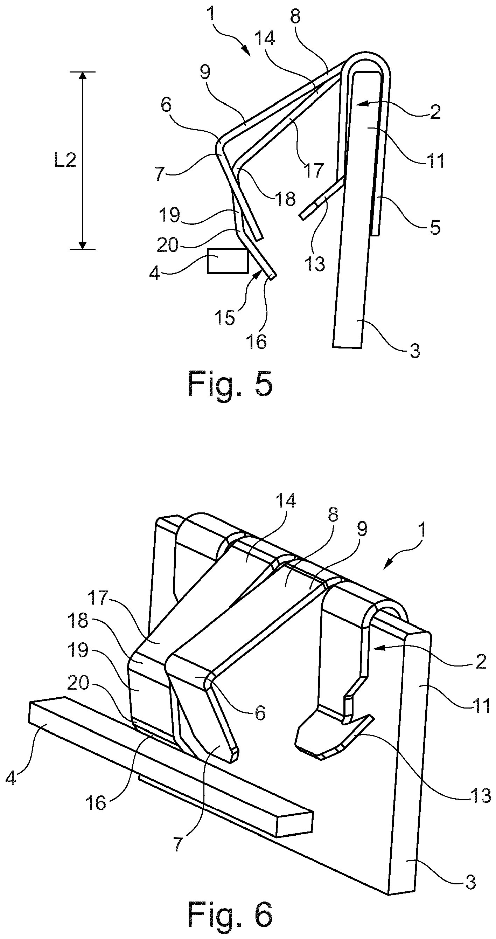

Der erste Schenkel 8 weist einen Biegeabschnitt 6 auf, welcher einen sich von der Aufnahme 2 weg erstreckenden Schenkelarm 9 des ersten Schenkels 8 mit einem Stützabschnitt 7 des Schenkels 8 verbindet. Der Stützabschnitt 7 weist eine zum Kontakt mit dem zweiten Bauteil 4 vorgesehene Stützfläche 10 auf. Der zweite Schenkel 14 weist einen ersten Biegeabschnitt 18 auf, welcher einen Schenkelarm 17 des zweiten Schenkels 14, der sich von der Aufnahme 2 weg erstreckt, mit einem Übergangsabschnitt 19 verbindet. Ferner weist der zweite Schenkel 14 einen zweiten Biegeabschnitt 20 auf, welche den Übergangsabschnitt 19 mit einem Stützabschnitt 16 des zweiten Schenkels verbindet. An dem Stützabschnitt 16 des zweiten Schenkels 14 ist die zweite Stützfläche 15 (die alternative Stützfläche 15) vorgesehen. Figur 5 zeigt, dass sich der Clip mit der alternativen Stützfläche 15 an dem zweiten Bauteil 4 abstützt.

Die Biegeachse B, um die der Biegeabschnitt 6 und der Biegeabschnitt 18 gebogen sind, und die Biegeachse B1, um die der zweite Biegeabschnitt 20 des zweiten Schenkels 14 gebogen ist, verlaufen parallel zur Längsachse A.

Insbesondere der Figur 1 ist gut zu entnehmen, dass der zwischen dem Schenkelarm 9 des ersten Schenkels und dem Stützabschnitt 7 des ersten Schenkels 8 eingeschlossene Winkel beta kleiner ist, als der zwischen dem Schenkelarm 17 des zweiten Schenkels 14 und dem Übergangsabschnitt 19 des zweiten Schenkels 14 eingeschlossene Winkel alpha. In Figur 1 ist ferner zu sehen, dass die Stützfläche 10 des ersten Schenkels 8 parallel zur alternativen Stützfläche 15 des zweiten Schenkels 14 verläuft und das sowohl die erste Stützfläche 10 als auch die zweite Stützfläche 15 nicht parallel zur Rückwand 5 verlaufen.

Die Figur 2 zeigt besonders deutlich, dass die Schenkel 8 und 14 aus stabförmigen Segmenten bestehen und einstückig mit der Aufnahme 2 ausgebildet sind, nämlich durch entsprechendes Umbiegen und Zuschneiden eines Blechabschnitts erzeugt wurden.

Die Figuren 3 und 4 einerseits und 5 und 6 andererseits zeigen den Clip 1 jeweils in einer Einbaulage. Dabei unterscheidet sich die Lage des zweiten Bauteils 4 relativ zum ersten Bauteil 3 zwischen den Figuren 3, 4 einerseits und den Figuren 5,6. Durch den Doppelpfeil L1 in Figur 3 und L2 in Figur 4 angedeutet, ist zu erkennen, dass das obere Ende des Vorsprungs 11 des ersten Bauteils 3 in der Figur 3 näher an dem zweiten Bauteil 4 liegt, als in der Figur 4 (L2 größer L1). Diese unterschiedliche Lage kann sich durch Herstellungsprozesse ergeben und zeigt das Toleranzband der Relativlagen des ersten Bauteils 3 zum zweiten Bauteil 4, das sich ergeben kann. Wie der Vergleich der Figuren 3, 4 mit 5,6, bietet der erfindungsgemäße Clip jedoch für beide Toleranzlagen eine gute Abstützung des ersten Bauteils 3 an dem zweiten Bauteil 4 an.

In der in den Figuren 5,6 dargestellten Ausführungsform stützt sich der Clip 1 mit dem zweiten Schenkel 14 und zwar mit der alternativen Stützfläche 15 des zweiten Stützabschnitts 16 an dem Bauteil 4 ab. Zu erkennen ist in der Figur 5 auch, dass der zweite Schenkel 14 umgebogen wurde und somit auch eine Abstützkraft auf das Bauteil 4 ausübt. Die Figur 5 zeigt, dass der erste Schenkel 8 nicht in Kontakt mit dem zweiten Bauteil 4 steht.

In der Ausführungsform der Figuren 3,4 ist zu erkennen, dass aufgrund des geringen Abstands L1 der zweite Schenkel 14 mit dem an ihm vorgesehenen zweiten Stützabschnitt 16 bereits gar nicht mehr in Eingriff mit dem zweiten Bauteil 4 gelangt, sondern nur noch mit dem Übergangsabschnitt 19. Dafür liegt der erste Schenkel 8 mit seiner Stützfläche 10 an dem Stützabschnitt 7 an dem zweiten Bauteil 4 an. In den Figur 3,4 ist ferner zu erkennen, dass sowohl der erste Schenkel 8 umgebogen wurde und somit eine Abstützkraft auf das zweite Bauteil 4 ausübt.

Die Figur 7 zeigt eine schematische Seitenansicht auf den erfindungsgemäßen Clip und zeigt für die Auslegung des Clips häufig relevante Größen. Relevant für die Auslegung des Clips sind Umgebungsbedingungen, die sich aus der Art des ersten Bauteils und der Art des zweiten Bauteils sowie der Relativlage des ersten Bauteils relativ zum zweiten Bauteil und insbesondere den gewünschten Toleranzbänder ergeben. Fig. 7 ist dabei so angelegt, dass sie das erste Bauteil 3 und das zweite Bauteil 4 (in zwei unterschiedlichen Lagen innerhalb des Toleranzbandes) zeigt und zudem den Clip 1 zeigt, allerdings nur graphisch überlagert und in entspannter Form. Die Fig. 7 zeigt somit nicht, wie der Clip konkret das erste Bauteil 3 an dem zweiten Bauteil 4 abstützt, sondern zeigt, dass die Schenkel 8, 14 des Clip 1 verformt (gebogen) werden, wenn das erste Bauteil 3 in die in dem zweiten Bauteil 4 vorgesehene Ausnehmung eingeführt wird. So ist für die Auslegung des Clips der Abstand E relevant, der den Abstand zwischen dem zweiten Bauteil 4 und dem Vorsprung 11 des ersten Bauteils 3 in horizontaler Richtung beschreibt. Ferner ist der sich aus der Auslegung der gewählten Toleranzbändern ergebende maximaler Abstand C und der minimale Abstand F des oberen Endes des Vorsprungs 11 relativ zum zweiten Bauteil 4 für die Auslegung relevant. In der Figur 7 ist die Maximallage des Bauteils 4 und die Minimallage des Bauteils 4' angedeutet. Aus diesen Größen ergibt sich auch der Winkel W und die Länge D der Geraden, die das obere Ende des Vorsprungs 11 mit der oberen Kante des Bauteils 4 in der Minimallage des zweiten Bauteils 4 verbindet.

Die Figur 8 zeigt Auslegungsgrößen für den erfindungsgemäßen Clip. Fig. 8 ist dabei ebenfalls so angelegt, dass sie das erste Bauteil 3 und das zweite Bauteil 4 (in zwei unterschiedlichen Lagen innerhalb des Toleranzbandes) zeigt und zudem den Clip 1 zeigt, allerdings nur graphisch überlagert und in entspannter Form. Eine relevante Auslegungsgrößen kann der Winkel w der vertikalen Mittelachse der Aufnahme 2 relativ zum Schenkelarm 9 des ersten Schenkels 8 sein und ferner ist dies die Länge d des Schenkelarms 9. Ferner ist dies ein Vorspannungswinkel U. Dieser ergibt sich bei Betrachtungen der Minimallage des zweiten Bauteils 4' im Vergleich zu der nicht umgebogenen Lage des Stützabschnitts 7. Ermittelt man den Schnittpunkt zwischen der Verlängerung des nicht umgebogenen Stützabschnitts 7 mit der Verlängerung des Schenkelarms 9 und verbindet diesen Schnittpunkt mit der Kante des zweiten Bauteils 4 in seiner Minimallage, so ist der eingeschlossene Winkel U dieser Linie mit dem Schenkelarm 9 ein Maß dafür, inwieweit der Stützabschnitt 7 zurückgebogen werden muss, wenn er in dieser Minimallage des zweiten Bauteils 4 in Anlage mit dem zweiten Bauteil 4 gelangt. In gleicher Weise lässt sich der Abstand e zwischen dem Schenkelarm 9 und der Kante des zweiten Bauteils 4 in Minimallage ermitteln. Die Länge a gibt die Länge des Stützabschnitts 7 wieder.

Bevorzugt wird d < D gewählt. Idealerweise ist d jedoch so nah wie möglich an D. Ferner wird vorzugsweise w > W gewählt. Der Schenkel muss bei der Montage deshalb nicht plastisch verformt werden. Ferner ist e < a < A/Sin (w + beta). Ferner ist vorzugsweise beta > U. Außerdem bietet es sich an 180 ° - beta > T > W zu wählen.

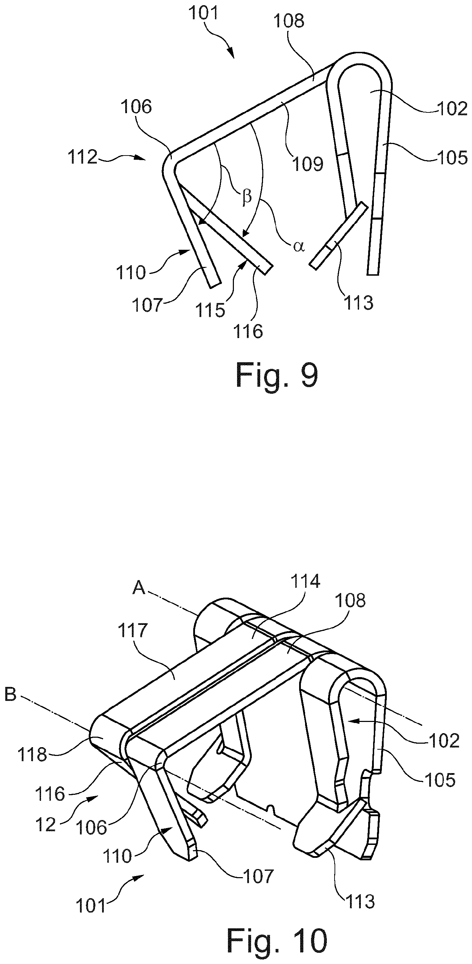

Die Fig. 9 und 10 zeigen einen Clip 101. Dabei werden mit der in den Fig. 1 bis 8 gezeigten Ausführungsform des Clips 1 übereinstimmende Elemente mit einem um den Wert 100 erhöhten Bezugszeichen in Bezug genommen.

Der in den Fig. 9 und 10 gezeigte Clip 101 unterscheidet sich von der in den Fig. 1 bis 8 gezeigten Ausführungsform des Clips 1 insbesondere dadurch, dass der zweite Schenkel 114 nicht mit dem zweiten Biegeabschnitt 118 in einen Übergangsabschnitt, sondern unmittelbar in den Stützabschnitt 116 übergeht.

Der in den Figuren 9,10 dargestellte Clip 101 weist einen ersten Schenkel 108 und einen zweiten Schenkel 114 auf. Der erste Schenkel 108 und der zweite Schenkel 114 sind auf der gleichen Seite der Aufnahme 102 angeordnet und erstrecken sich von der Vorderseite 112 in die gleiche Richtung fort.

Der erste Schenkel 108 weist einen Biegeabschnitt 106 auf, welcher einen sich von der Aufnahme 102 weg erstreckenden Schenkelarm 109 des ersten Schenkels 108 mit einem Stützabschnitt 107 des Schenkels 8 verbindet. Der Stützabschnitt 107 weist eine zum Kontakt mit dem zweiten Bauteil 4 vorgesehene Stützfläche 110 auf. Der zweite Schenkel 114 weist einen ersten Biegeabschnitt 118 auf, welcher einen Schenkelarm 117 des zweiten Schenkels 114 mit einem Stützabschnitt 116 des zweiten Schenkels 114 verbindet. An dem Stützabschnitt 116 des zweiten Schenkels 114 ist die zweite Stützfläche 115 (die alternative Stützfläche 115) vorgesehen.

Die Biegeachse B, um die der Biegeabschnitt 106 und der Biegeabschnitt 118 gebogen sind verläuft parallel zur Längsachse A.
insbesondere der Figur 9 ist gut zu entnehmen, dass der zwischen dem Schenkelarm 109 des ersten Schenkels und dem Stützabschnitt 107 des ersten Schenkels 108 eingeschlossene Winkel beta größer ist, als der zwischen dem Schenkelarm 117 des zweiten Schenkels 114 und dem Stützabschnitt 116 zweiten Schenkels 114 eingeschlossene Winkel alpha. In Figur 3 ist ferner zu sehen, dass die Stützfläche 110 des ersten Schenkels 108 nicht parallel zur alternativen Stützfläche 115 des zweiten Schenkels 114 verläuft und dass sowohl die erste Stützfläche 110 als auch die zweite Stützfläche 115 nicht parallel zur Rückwand 105 verlaufen.

Die Figur 10 zeigt besonders deutlich, dass die Schenkel 108 und 114 aus stabförmigen Segmenten bestehen und einstückig mit der Aufnahme 102 ausgebildet sind, nämlich durch entsprechendes Umbiegen und Zuschneiden eines Blechabschnitts erzeugt wurden.

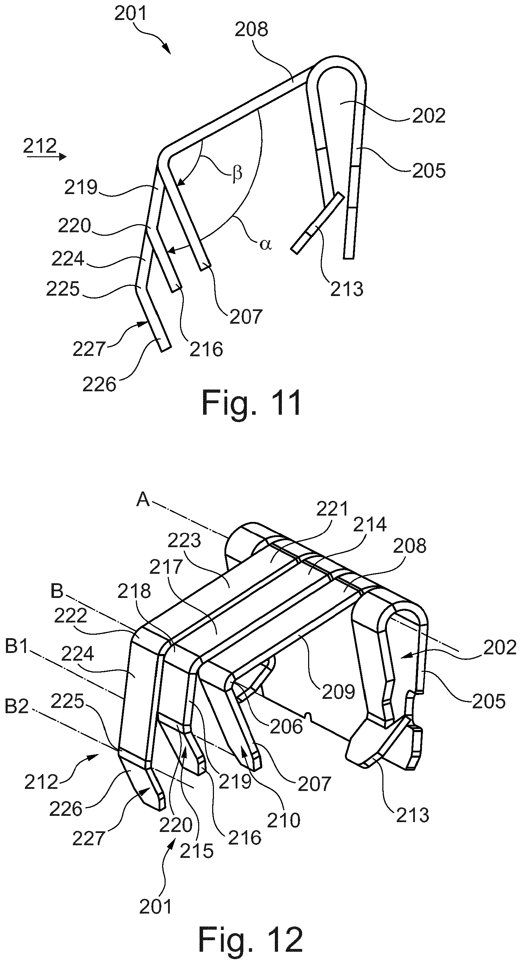

Die Fig. 11 und 12 zeigen eine zweite Ausführungsform des erfindungsgemäßen Clips 201. Dabei werden mit der in den Fig. 1 bis 8 gezeigten Ausführungsform des Clips 1 übereinstimmende Elemente mit einem um den Wert 200 erhöhten Bezugszeichen in Bezug genommen.

Die in den Fig. 11 und 12 gezeigte, zweite Ausführungsform des Clips 101 unterscheidet sich von der in den Fig. 1 bis 8 gezeigten Ausführungsform des Clips 1 insbesondere dadurch, dass zusätzlich ein dritter Schenkel 221 vorgesehen ist.

Der in den Figuren 11,12 dargestellte Clip 201 weist einen ersten Schenkel 208 und einen zweiten Schenkel 214 auf. Der erste Schenkel 208 und der zweite Schenkel 214 sind auf der gleichen Seite der Aufnahme 202 angeordnet und erstrecken sich von der Vorderseite 212 in die gleiche Richtung fort. Zudem ist ein dritter Schenkel 221 auf der gleichen Seite der Aufnahme 202 angeordnet, der sich sich von der Vorderseite 212 in die gleiche Richtung forterstreckt.

Der erste Schenkel 208 weist einen Biegeabschnitt 206 auf, welcher einen sich von der Aufnahme 202 weg erstreckenden Schenkelarm 209 des ersten Schenkels 208 mit einem Stützabschnitt 207 des Schenkels 208 verbindet. Der Stützabschnitt 207 weist eine zum Kontakt mit dem zweiten Bauteil 4 vorgesehene Stützfläche 210 auf. Der zweite Schenkel 214 weist einen ersten Biegeabschnitt 218 auf, welcher einen Schenkelarm 217 des zweiten Schenkels 214, der sich von der Aufnahme 202 weg erstreckt, mit einem Übergangsabschnitt 219 verbindet. Ferner weist der zweite Schenkel 214 einen zweiten Biegeabschnitt 220 auf, welche den Übergangsabschnitt 219 mit einem Stützabschnitt 216 des zweiten Schenkels verbindet. An dem Stützabschnitt 216 des zweiten Schenkels 214 ist die zweite Stützfläche 215 (die alternative Stützfläche 15) vorgesehen. Der dritte Schenkel 221 weist einen ersten Biegeabschnitt 222 auf, welcher einen Schenkelarm 223 des dritten Schenkels 221, der sich von der Aufnahme 202 weg erstreckt, mit einem Übergangsabschnitt 224 verbindet. Ferner weist der dritte Schenkel 221 einen zweiten Biegeabschnitt 225 auf, welche den Übergangsabschnitt 224 mit einem Stützabschnitt 226 des dritten Schenkels 221 verbindet. An dem Stützabschnitt 226 des dritten Schenkels 221 ist die dritte Stützfläche 227 vorgesehen.

Die Biegeachse B, um die der Biegeabschnitt 206 und der Biegeabschnitt 218 und der Biegeabschnitt 222 gebogen sind, und die Biegeachse B1, um die der zweite Biegeabschnitt 220 des zweiten Schenkels 214 gebogen ist, und die Biegeachse B2, um die der zweite Biegeabschnitt 225 des dritten Schenkels 221 gebogen ist, verlaufen parallel zur Längsachse A.

Insbesondere der Figur 11 ist gut zu entnehmen, dass der zwischen dem Schenkelarm 209 des ersten Schenkels 208 und dem Stützabschnitt 207 des ersten Schenkels 208 eingeschlossene Winkel beta kleiner ist, als der zwischen dem Schenkelarm 217 des zweiten Schenkels 214 und dem Übergangsabschnitt 219 des zweiten Schenkels 214 eingeschlossene Winkel alpha. Der zwischen dem Schenkelarm 223 des dritten Schenkels 221 und dem Übergangsabschnitt 224 des dritten Schenkels 221 eingeschlossene Winkel entspricht dem Winkel alpha.

In Figur 11 ist ferner zu sehen, dass die Stützfläche 210 des ersten Schenkels 208 parallel zur alternativen Stützfläche 215 des zweiten Schenkels 214 verläuft, wie auch die Stützfläche 227 des dritten Schenkels 221 und dass sowohl die erste Stützfläche 210 als auch die zweite Stützfläche 215 als auch die dritte Stützfläche 227 nicht parallel zur Rückwand 205 verlaufen.

Die Figur 12 zeigt besonders deutlich, dass die Schenkel 208 und 214 und 221 aus stabförmigen Segmenten bestehen und einstückig mit der Aufnahme 202 ausgebildet sind, nämlich durch entsprechendes Umbiegen und Zuschneiden eines Blechabschnitts erzeugt wurden.

## Patentansprüche

1. Clip (1, 101, 201) zum Abstützen eines ersten Bauteils (3) an einem zweiten Bauteil (4), wobei
- der Clip (1, 101, 201) eine Aufnahme (2, 102, 202) zum Aufnehmen eines Vorsprungs des ersten Bauteils (3) und einen mit der Aufnahme (2, 102, 202) verbundenen ersten Schenkel (8, 108, 208) zum Abstützen an dem zweiten Bauteil (4) aufweist und
- der erste Schenkel (8, 108, 208) einen Biegeabschnitte (6, 106, 206) aufweist, welcher einen sich von der Aufnahme (2, 102, 202) weg erstreckenden Schenkelarm (9, 109, 209) des ersten Schenkels (8, 108, 208) mit einem eine zum Kontakt mit dem zweiten Bauteil (4) vorgesehene Stützfläche (10, 110, 210) aufweisenden Stützabschnitt (7, 107, 207) des ersten Schenkels (8, 108, 208) verbindet,
- und ein zweiter, mit der Aufnahme (2, 102, 202) verbundener Schenkel (14, 114, 214) vorgesehen ist, der einen eine alternative Stützfläche (15, 115, 215) aufweisenden Stützabschnitt (16, 116, 216) aufweist, wobei sich der erste Schenkel (8, 108, 208) und der zweite Schenkel (14, 114, 214) auf derselben Seite der Aufnahme (2, 102, 202) befinden, wobei der zweite Schenkel (14, 114, 214) einen sich von der Aufnahme (2, 102, 202) weg erstreckenden Schenkelarm (17, 117, 217) aufweist,
wobei der zweite Schenkel (14, 214) einen ersten Biegeabschnitt (18, 218) aufweist, welcher den Schenkelarm (17, 217) des zweiten Schenkels (14, 214) mit einem Übergangsabschnitt (19, 219) verbindet, und einen zweiten Biegeabschnitt (20, 220) aufweist, welcher den Übergangsabschnitt (19, 219) mit dem Stützabschnitt (16, 216) des zweiten Schenkels (14, 214) verbindet, **dadurch gekennzeichnet, dass** die Stützfläche (10, 210) des ersten Schenkels (8, 208) parallel zur alternativen Stützfläche (15, 215) des zweiten Schenkels (14, 214) verläuft.

2. Clip nach Anspruch 1, **dadurch gekennzeichnet, dass** sich die Aufnahme (2, 102, 202) entlang einer Längsachse (A) erstreckt und dass die Biegeachse (B), um die der Biegeabschnitt (6, 106, 206) des ersten Schenkels (8, 108, 208) gebogen ist, und/oder die Biegeachse (B), um die der erste Biegeabschnitt (18, 218) des zweiten Schenkels (14, 214) gebogen ist, und/oder die Biegeachse (B1), um die der zweite Biegeabschnitt (20, 220) des zweiten Schenkels (14, 214) gebogen ist, parallel zur Längsachse (A) verläuft.

3. Clip nach einem der Ansprüche 1 oder 2, **dadurch gekennzeichnet, dass** der zwischen dem Schenkelarm (9, 209) des ersten Schenkels (8, 208) und dem Stützabschnitt (7, 107) des ersten Schenkels (8, 208) eingeschlossene Winkel (BETA) unterschiedlich zu dem zwischen dem Schenkelarm (17, 217) des zweiten Schenkels (14, 214) und dem Übergangsabschnitt (19, 219) des zweiten Schenkels (14, 214) eingeschlossene Winkel (ALPHA) ist.

4. Clip nach einem der Ansprüche 1 bis 3, **dadurch gekennzeichnet, dass** die Aufnahme eine Rückwand (5, 105, 205) aufweist und die Stützfläche (10, 110, 210) des ersten Schenkels (8, 108, 208) und/oder die alternative Stützfläche (15, 115, 215) des zweiten Schenkels (14, 114, 214) nicht parallel zur Rückwand (5, 105, 205) verläuft.

5. Clip nach einem der Ansprüche 1 bis 4, soweit diese auf Anspruch 2 rückbezogen sind, **dadurch gekennzeichnet, dass** sich der Schenkelarm (9, 109, 209) des ersten Schenkels (8, 108, 208) und der Schenkelarm (17, 117, 217) des zweiten Schenkels (14, 114, 214) in Form und/oder Größe entsprechen.

6. Clip nach einem der Ansprüche 1 bis 5, soweit diese auf Anspruch 2 rückbezogen sind, **dadurch gekennzeichnet, dass** der Schenkelarm (9, 109, 209) des ersten Schenkels (8, 108, 208) und der Schenkelarm (17, 117, 217) des zweiten Schenkels (14, 114, 214) nebeneinander angeordnet sind.

7. Clip nach einem der Ansprüche 1 bis 6, **gekennzeichnet durch** mehr als zwei Schenkel (208, 214, 221) auf einer Seite der Aufnahme (202).

8. Clip nach einem der Ansprüche 1 bis 7, **dadurch gekennzeichnet, dass** der Schenkelarm (9, 109, 209) des ersten Schenkels (8, 108, 208) und/oder der Schenkelarm (17, 117, 217) des zweiten Schenkels (14, 114, 214) und/oder der Stützabschnitt (7, 107, 207) des ersten Schenkels (8, 108, 208) und/oder der Stützabschnitt (16, 116, 216) des zweiten Schenkels (14, 114, 214) und/oder der Übergangsabschnitt (19, 219) des zweiten Schenkels (14, 214) stabförmig ausgeführt sind.

9. Vorrichtung mit einem ersten Bauteil (3) und einem zweiten Bauteil (4) sowie einem Clip (1, 101, 201) nach einem der vorhergehenden Ansprüche.

10. Vorrichtung nach Anspruch 9, **dadurch gekennzeichnet, dass** das zweite Bauteil (4) eine Ausnehmung (16) aufweist, in der das erste Bauteil (3) angeordnet ist.

11. Verfahren zum Abstützen eines ersten Bauteils (3) an einem zweiten Bauteil (4), **dadurch gekennzeichnet, dass** die Aufnahme (2, 102, 202) eines Clips (1, 101, 201) nach einem der Ansprüche 1 bis 8 mit einem Vorsprung des ersten Bauteils (3) verbunden wird und entweder die Stützfläche (10, 110, 210) des ersten Schenkels (8, 108, 208) oder die alternative Stützfläche (15, 115, 215) des zweiten Schenkels (14, 114, 214) in Anlage mit dem zweiten Bauteil (4) gebracht wird.

## Claims

1. Clip (1, 101, 201) for supporting a first component (3) on a second component (4), wherein
- the clip (1, 101, 201) has a receiving portion (2, 102, 202) for receiving a protrusion of the first component (3) and a first leg (8, 108, 208) connected to the receiving portion (2, 102, 202) for supporting on the second component (4), and
- the first leg (8, 108, 208) has a bending sections (6, 106, 206), which connects a leg arm (9, 109, 209) of the first leg (8, 108, 208) extending away from the receiving portion (2, 102, 202) to a support section (7, 107, 207) of the first leg (8, 108, 208) having a support surface (10, 110, 210) provided for contact with the second component (4),
- and a second leg (14, 114, 214) connected to the receiving portion (2, 102, 202) is provided, which has a support section (16, 116, 216) having an alternative support surface (15, 115, 215), the first leg (8, 108, 208) and the second leg (14, 114, 214) being located on the same side of the receiving portion (2, 102, 202), the second leg (14, 114, 214) having a leg arm (17, 117, 217) extending away from the receiving portion (2, 102, 202),
**wherein** the second leg (14, 214) has a first bending section (18, 218), which connects the leg arm (17, 217) of the second leg (14, 214) to a transition section (19, 219), and has a second bending section (20, 220), which connects the transition section (19, 219) to the support section (16, 216) of the second leg (14, 214), **characterized in that** the support surface (10, 210) of the first leg (8, 208) runs parallel to the alternative support surface (15, 215) of the second leg (14, 214).

2. Clip according to Claim 1, **characterized in that** the receiving portion (2, 102, 202) extends along a longitudinal axis (A), and the bending axis (B), about which the bending section (6, 106, 206) of the first leg (8, 108, 208) is bent, and/or the bending axis (B), about which the first bending section (18, 218) of the second leg (14, 214) is bent, and/or the bending axis (B1), about which the second bending section (20, 220) of the second leg (14, 214) is bent, runs parallel to the longitudinal axis (A).

3. Clip according to one of claims 1 or 2, **characterized in that** the angle (BETA) included between the leg arm (9, 209) of the first leg (8, 208) and the support section (7, 107) of the first leg (8, 208) is different from the angle (ALPHA) included between the leg arm (17, 217) of the second leg (14, 214) and the transition section (19, 219) of the second leg (14, 214).

4. Clip according to one of Claims 1 to 3, **characterized in that** the receiving portion has a rear panel (5, 105, 205), and the support surface (10, 110, 210) of the first leg (8, 108, 208) and/or the alternative support surface (15, 115, 215) of the second leg (14, 114, 214) does not run parallel to the rear panel (5, 105, 205).

5. Clip according to one of Claims 1 to 4, insofar as these refer back to Claim 2, **characterized in that** the leg arm (9, 109, 209) of the first leg (8, 108, 208) and the leg arm (17, 117, 217) of the second leg (14, 114, 214) correspond to each other in shape and/or size.

6. Clip according to one of Claims 1 to 5, insofar as these refer back to Claim 2, **characterized in that** the leg arm (9, 109, 209) of the first leg (8, 108, 208) and the leg arm (17, 117, 217) of the second leg (14, 114, 214) are disposed side-by-side.

7. Clip according to one of Claims 1 to 6, **characterized by** more than two legs (208, 214, 221) on one side of the receiving portion (202).

8. Clip according to one of Claims 1 to 7, **characterized in that** the leg arm (9, 109, 209) of the first leg (8, 108, 208) and/or the leg arm (17, 117, 217) of the second leg (14, 114, 214) and/or the support section (7, 107, 207) of the first leg (8, 108, 208) and/or the support section (16, 116, 216) of the second leg (14, 114, 214) and/or the transition section (19, 219) of the second leg (14, 214) are configured to be bar-shaped.

9. Device with a first component (3) and a second component (4) as well as a clip (1, 101, 201) according to one of the previous claims.

10. Device according to Claim 9, **characterized in that** the second component (4) has a recess (16) in which the first component (3) is disposed.

11. Method for supporting a first component (3) on a second component (4), **characterized in that** the receiving portion (2, 102, 202) of a clip (1, 101, 201) according to one of Claims 1 to 8 is connected to a protrusion of the first component (3), and either the support surface (10, 110, 210) of the first leg (8, 108, 208) or the alternative support surface (15, 115, 215) of the second leg (14, 114, 214) is brought to rest against the second component (4).

## Revendications

1. Agrafe (1, 101, 201) pour appuyer un premier composant (3) sur un deuxième composant (4), dans laquelle
- l'agrafe (1, 101, 201) présente un réceptacle (2, 102, 202) pour recevoir une protubérance du premier composant (3) et une première branche (8, 108, 208) reliée au réceptacle (2, 102, 202) pour venir en appui sur le deuxième composant (4) et
- la première branche (8, 108, 208) présente une sections de flexion (6, 106, 206), qui relie un bras de branche (9, 109, 209) de la première branche (8, 108, 208) s'écartant du réceptacle (2, 102, 202) à une section d'appui (7, 107, 207) de la première branche (8, 108, 208) présentant une surface d'appui (10, 110, 210) prévue pour le contact avec le deuxième composant (4),
- et une deuxième branche (14, 114, 214) reliée au réceptacle (2, 102, 202) est prévue, qui présente une section d'appui (16, 116, 216) présentant une surface d'appui alternative (15, 115, 215), dans laquelle la première branche (8, 108, 208) et la deuxième branche (14, 114, 214) se trouvent sur le même côté du réceptacle (2, 102, 202), dans laquelle la deuxième branche (14, 114, 214) présente un bras de branche (17, 117, 217) s'écartant du réceptacle (2, 102, 202),
**dans laquelle** la deuxième branche (14, 214) présente une première section de flexion (18, 218) qui relie le bras de branche (17, 217) de la deuxième branche (14, 214) à une section de transition (19, 219), et une deuxième section de flexion (20, 220) qui relie la section de transition (19, 219) à la section d'appui (16, 216) de la deuxième branche (14, 214), **caractérisée en ce que** la surface d'appui (10, 210) de la première branche (8, 208) s'étend parallèlement à la surface d'appui alternative (15, 215) de la deuxième branche (14, 214).

2. Agrafe selon la revendication 1, **caractérisée en ce que** le réceptacle (2, 102, 202) s'étend selon un axe longitudinal (A) et que l'axe de flexion (B) autour duquel la section de flexion (6, 106, 206) de la première branche (8, 108, 208) est courbée, et/ou l'axe de flexion (B) autour duquel la première section de flexion (18, 218) de la deuxième branche (14, 214) est courbée, et/ou l'axe de flexion (B1) autour duquel la deuxième section de flexion (20, 220) de la deuxième branche (14, 214) est courbée, s'étend parallèlement à l'axe longitudinal (A).

3. Agrafe selon une des revendications 1 ou 2, **caractérisée en ce que** un angle (BETA) défini entre le bras de branche (9, 209) de la première branche (8, 208) et la section d'appui (7, 107) de la première branche (8, 208) est différent de l'angle (ALPHA) défini entre le bras de branche (17, 217) de la deuxième branche (14, 214) et la section de transition (19, 219) de la deuxième branche (14, 214).

4. Agrafe selon une des revendications 1 à 3, **caractérisée en ce que** le réceptacle présente une paroi arrière (5, 105, 205) et la surface d'appui (10, 110, 210) de la première branche (8, 108, 208) et/ ou la surface d'appui alternative (15, 115, 215) de la deuxième branche (14, 114, 214) ne s'étend pas parallèlement à la paroi arrière (5, 105, 205).

5. Agrafe selon une des revendications 1 à 4, dans la mesure où celles-ci dépendent de la revendication 2, **caractérisée en ce que** le bras de branche (9, 109, 209) de la première branche (8, 108, 208) et le bras de branche (17, 117, 217) de la deuxième branche (14, 114, 214) se correspondent en forme et/ou taille.

6. Agrafe selon une des revendications 1 à 5, dans la mesure où celles-ci dépendent de la revendication 2, **caractérisée en ce que** le bras de branche (9, 109, 209) de la première branche (8, 108, 208) et le bras de branche (17, 117, 217) de la deuxième branche (14, 114, 214) sont disposés côte à côte.

7. Agrafe selon une des revendications 1 à 6, **caractérisée par** plus de deux branches (208, 214, 221) sur un côté du réceptacle (202).

8. Agrafe selon une des revendications 1 à 7, **caractérisée en ce que** le bras de branche (9, 109, 209) de la première branche (8, 108, 208) et/ou le bras de branche (17, 117, 217) de la deuxième branche (14, 114, 214) et/ou la section d'appui (7, 107, 207) de la première branche (8, 108, 208) et/ou la section d'appui (16, 116, 216) de la deuxième branche (14, 114, 214) et/ou la section de transition (19, 219) de la deuxième branche (14, 214) sont en forme de tige.

9. Dispositif comportant un premier composant (3) et un deuxième composant (4) ainsi qu'une agrafe (1, 101, 201) selon une des revendications précédentes.

10. Dispositif selon la revendication 9, **caractérisé en ce que** le deuxième composant (4) présente un évidement (16), dans lequel est disposé le premier composant (3).

11. Procédé d'appui d'un premier composant (3) sur un deuxième composant (4), **caractérisé en ce que** le réceptacle (2, 102, 202) d'une agrafe (1, 101, 201) selon une des revendications 1 à 8 est relié à une protubérance du premier composant (3) et soit la surface d'appui (10, 110, 210) de la première branche (8, 108, 208) soit la surface d'appui alternative (15, 115, 215) de la deuxième branche (14, 114 , 214) est amenée en appui sur le deuxième composant (4).
